# EUROPEAN PATENT APPLICATION

(11) **EP 1 600 856 A2**
(43) Date of publication of application: **30.11.2005**
(21) Application number: 05103818.0
(22) Date of filing: 09.05.2005
(51) Int. Cl.: G06F 9/46, G06F 17/30

(54) **Xparts-schematized data wrapper**

(30) Priority: 21.05.2004 US 850969
(71) Applicant: MICROSOFT CORPORATION, Redmond, WA 98052 (US)
(72) Inventor: Woodall, Zachary Page, Redmond, WA 98052 (US); Lucovsky, Mark Howard, Redmond, WA 98052 (US); Paoli, Jean, Redmond, WA 98052 (US); Lindhorst, Gregory S., Redmond, WA 98052 (US)
(74) Representative: Grünecker, Kinkeldey, Stockmair & Schwanhäusser Anwaltssozietät

(57) **Abstract**

.xParts are schematized data wrappers that provide a means by which a suite of office applications can share data amongst themselves and other application as well. Data from an arbitrary resource is selected and is associated with a schema. A schema is used to define the data type of the data, which facilitates representing the data. A unique identifier is associated with the data from the arbitrary resource, which allows a user to provide a context in which the data is to be displayed. The data is displayed in accordance with definitions provided by the schema.

## Description

### Background of the Invention

Computer systems are important tools used by various people in many different ways. Computer applications are executed on the computer systems. These computer applications are software programs, typically written by application developers, compiled into object code, and then stored on the various computer systems for operation. The creation and use of computer applications is a well-known aspect of computer technology in general.

When creating a computer application, the developer typically chooses a particular environment or platform on which the application will ultimately be executed. For example, when writing an application, the developer will choose the Microsoft Windows® platform, the Linux platform, or some other platform. As a result of this choice, the program developer may have different options available for writing the application.

Accordingly, various applications running on various systems manipulate information in response to user input and save the resulting data as files. The data that is saved in the files is often saved in such a way that the data can only be used by the application that produced file and such a way that the data is only usable on the type of platform in which the data was created. However, the data may also be useful in the context of application that are different from the application that was used to author the data, and the data might likewise be useful in other platforms that are different from the platform that was used to author the data.

In accordance with the present invention, data can be saved in files such that other programs can use and display the data, even when the other programs are run on platforms other than platform that was used to author the data.

### Summary of the Invention

The present invention is directed towards xParts, which are schematized data wrappers. xParts provides a means by which a suite of office applications can share data amongst themselves and other application as well. Data from an arbitrary resource is selected and is associated with a schema. A schema is used to define the data type of the data, which facilitates representing the data. A unique identifier is associated with the data from the arbitrary resource, which allows a user to provide a context in which the data is to be displayed. The data is displayed in accordance with definitions provided by the schema.

According to one aspect of the invention, a method for wrapping data comprises determining a data signal from an arbitrary data source. A primary schema is provided for determining parameters that are associated with the data signal. A unique identifier is provided that is associated with the data signal from an arbitrary resource. The data signal is dynamically represented in accordance with the determined parameters within a view that is used to convey the data signal to a user.

According to another aspect of the invention, a computer readable medium for wrapping data comprises instructions for determining a data signal from an arbitrary data source. A primary schema is provided for determining parameters that are associated with the data signal. A unique identifier is provided that is associated with the data signal from an arbitrary resource. The data signal is dynamically represented in accordance with the determined parameters within a view that is used to convey the data signal to a user.

According to yet another aspect of the invention, a system for wrapping data comprises means for determining a data signal from an arbitrary data source. A primary schema is provided for determining parameters that are associated with the data signal. A unique identifier is provided that is associated with the data signal from an arbitrary resource. The data signal is dynamically represented in accordance with the determined parameters within a view that is used to convey the data signal to a user.

According to a further aspect of the invention, a data structure comprises an xPart that is associated with a schema and that is configured to determine a data source for supplying data into an application edit surface, and an xPart reference element that is configured to identify entry points into the strongly typed document for representing views on data from the data source that is determined by the xPart.

### Brief Description of the Drawings

FIGURE 1 illustrates an exemplary computing device that may be used in one exemplary embodiment of the present invention.
FIGURE 2 is a screen view of an example scenario for using xParts, in accordance with the present invention.
FIGURE 3 is a top-level diagram of information components that are associated with xparts, in accordance with the present invention.
FIGURE 4 is a data layer diagram having data components for use with xParts, in accordance with the present invention.
FIGURE 5 is block diagram of a document using xParts, in accordance with the present invention.
FIGURE 6 is a listing of an example document using xParts, in accordance with the present invention.
FIGURE 7 is a flow diagram for using xParts, in accordance with the present invention.

### Detailed Description of the Preferred Embodiment

Throughout the specification and claims, the following terms take the meanings explicitly associated herein, unless the context clearly dictates otherwise. The terminology and interface specifications used herein are not intended to represent a particular language in which a particular object or method should be written. Rather, the terminology and interface specifications are used to describe the functionality and contents of an interface or object, such as function names, inputs, outputs, return values, and what operations are to be performed using the interface (or what operations are to be performed by the object).

### Illustrative Operating Environment

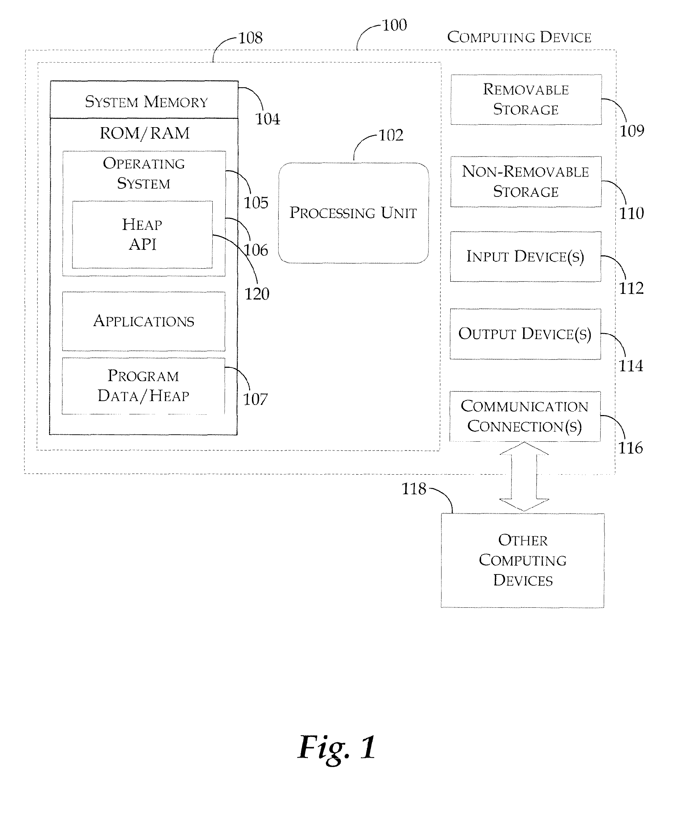

With reference to FIGURE 1, one exemplary system for implementing the invention includes a computing device, such as computing device 100. In a very basic configuration, computing device 100 typically includes at least one processing unit 102 and system memory 104. Depending on the exact configuration and type of computing device, system memory 104 may be volatile (such as RAM), non-volatile (such as ROM, flash memory, etc.) or some combination of the two. System memory 104 typically includes an operating system 105, one or more applications 106, and may include program data 107. In one embodiment, application 106 may include a wordprocessor application 120 that further includes ML editor 122. This basic configuration is illustrated in FIGURE 1 by those components within dashed line 108.

Computing device 100 may have additional features or functionality. For example, computing device 100 may also include additional data storage devices (removable and/or non-removable) such as, for example, magnetic disks, optical disks, or tape. Such additional storage is illustrated in FIGURE 1 by removable storage 109 and non-removable storage 110. Computer storage media may include volatile and nonvolatile, removable and non-removable media implemented in any method or technology for storage of information, such as computer readable instructions, data structures, program modules, or other data. System memory 104, removable storage 109 and non-removable storage 110 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 100. Any such computer storage media may be part of device 100. Computing device 100 may also have input device(s) 112 such as keyboard, mouse, pen, voice input device, touch input device, etc. Output device(s) 114 such as a display, speakers, printer, etc. may also be included. These devices are well know in the art and need not be discussed at length here.

Computing device 100 may also contain communication connections 116 that allow the device to communicate with other computing devices 118, such as over a network. Communication connection 116 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Information Integration (xParts)

The present invention is directed towards xParts, which facilitate information exchange from complex data sources, xParts provide a platform-and document type-independent way of sharing information between documents with a minimum of manual intervention by a user. For example, a developer can insert and retrieve strongly typed data (such as XML data for which a schema is known) for any type of document with a single set of code.

Conventional methods of sharing data between documents often requires manual intervention to bring information from a first document of a first type (such as Excel) to a second document of a second type (such as PowerPoint). This method is error prone, and typically requires manual intervention (such as a cut-and-paste) each time the information is to be repurposed, stored, or published in the second document.

In accordance with the present invention, a view of the complex data source can be instantiated in the second document as a live query against the complex data source. For example, a rich business information view can be pasted into a PowerPoint deck such that whenever the PowerPoint deck is viewed, a chart or pivot created inside Excel as a business information engine is produced by contemporaneously evaluating the data from the complex data source.

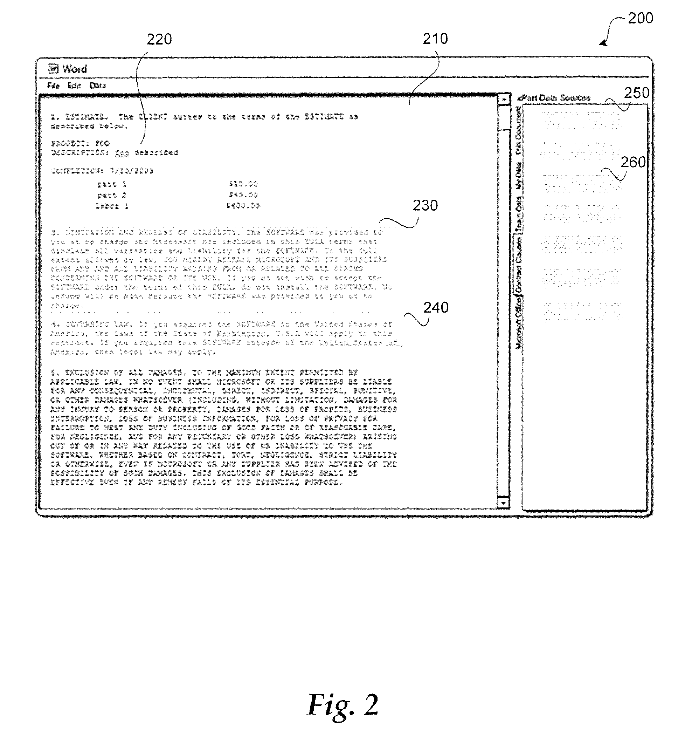

FIGURE 2 is a screen view of an example scenario for using xParts, in accordance with the present invention. In the example scenario, a user may encounter a screen 200 such as shown in the figure. Screen 200 comprises a view 210 of electronic information (such as an electronic document or file) that the user is editing. Electronic information comprises user information 220, which is information that is typically provided by the user.

Screen 200 further comprises visualizations 230 and 240 of xParts. The xParts can be selected and "dragged" from a complex data source (such as xPart data source 250) to view 210, thereby inserting xParts into the view, xPart Data Source 250 comprises, for example, a library of contract clauses for which xParts have been provided. The visualizations of contract clauses (e.g., clause 260) are shown in the view of xPart Data Source 250. Selecting and dragging the visualization of a contract clause causes the xPart that produces the visualization to be inserted, for example, into the file containing the electronic information being edited.

xParts are typically pure data entities that are associated with a predefined schema. A portion of the predefined schema is designed to allow housing of arbitrary data content, as well as xPart-related information. An xPart represents a fragment or another data source for supplying data into an application edit surface. xPartReference elements are used to identify entry points into a document for views on the xPart data.

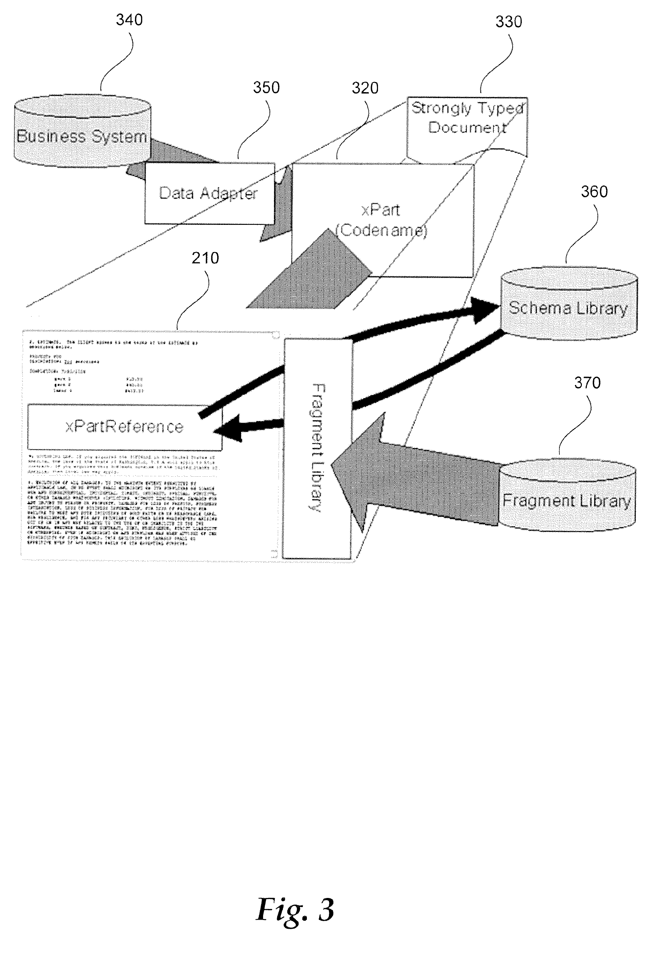

FIGURE 3 is a top-level diagram of information components that are associated with xparts, in accordance with the present invention. View 210 is a visualization of xPart 320 and an electronic document 330. Document 330 may be, for example, a strongly typed document. Business system 340 is arranged to provide information to data adapter 350 for use in xPart 320. Data adapter 350 can poll business system 340 for information and/or receive information being "pushed" from business system 340. In various embodiments, xPart 320 can receive information (by polling for information or by information being pushed) from a variety of sources, as further discussed below. Schema library 360 is may be used to associate and find resources that for complementing the namespace or schema. Schema library 360 allows easy deployment and synchronization of xParts. Fragment library 370 provides strongly typed data as reusable components and can provide resources for the strongly typed data such as visualizations, schema, and code.

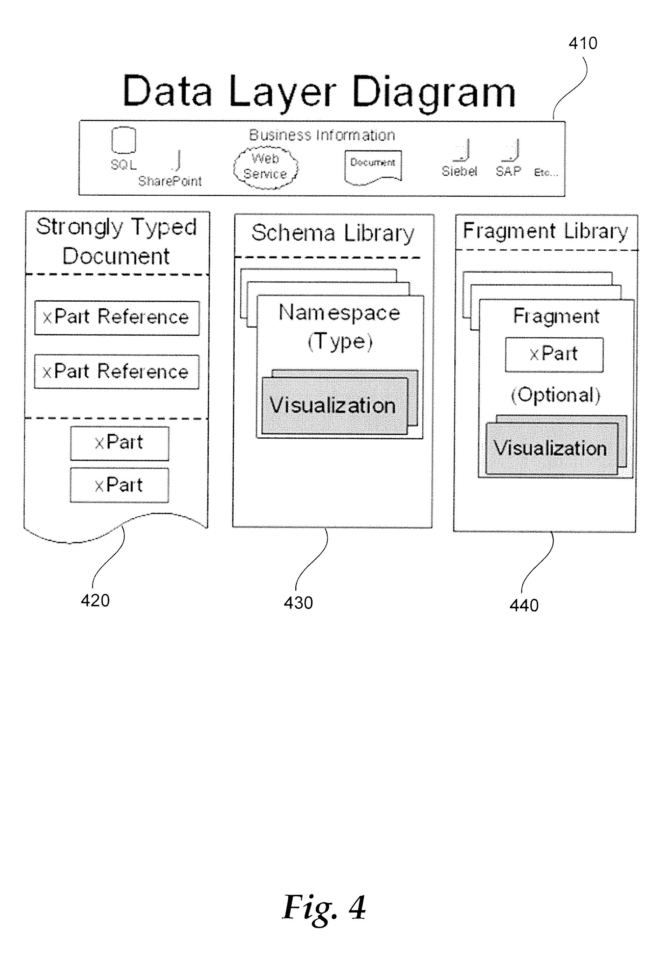

FIGURE 4 is a data layer diagram having data components for use with xParts, in accordance with the present invention. Business information systems 400 typically provides sources of useful information such shows Web services, documents, databases, information vendors, and light. Useful information from business information systems 400 can be integrated into strongly typed document 420 using xParts. xParts may exist as items of XML data within strongly typed documents. xParts may contain data within their own schema and/or may contain connection information to remote data sources.

Schema library 430 provides schema to which all xParts conform. The provided schema defines a namespace for defining the xParts. However, any xPart can be extended with additional schema information to form uniquely identifiable entities, which can be purposed for a specifc data representation task. Additionally, fragment library 440 may be provided for the convenience for grouping related xPart data in a library for convenient use. Accordingly, fragment library 440 is optional, and may be combined in part, or in whole, with schema library 440.

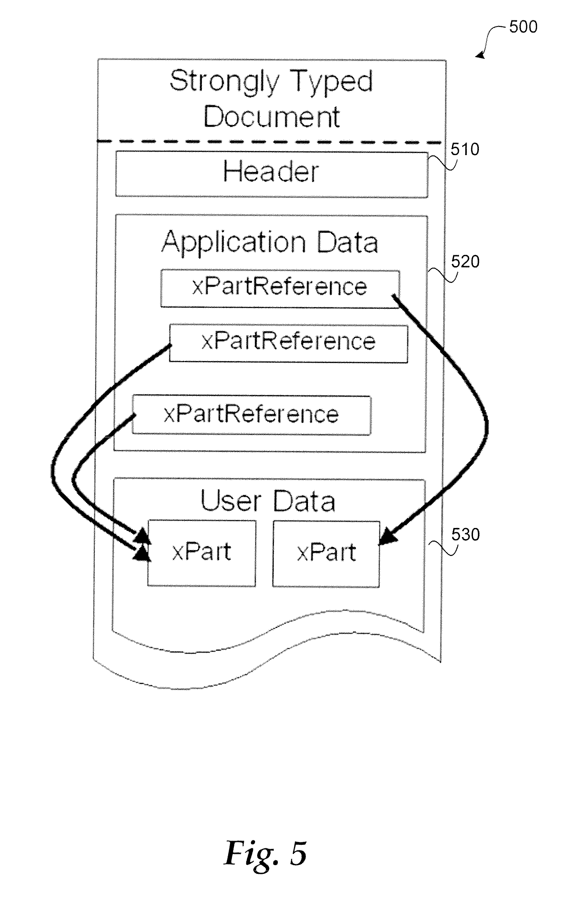

FIGURE 5 is block diagram of a document using xParts, in accordance with the present invention. Document 500 may comprise header 510, which typically contains metadata that is associated with document 500. Header 510 can also be used for security and authentication purposes.

Document 500 also comprises application data, which further comprises xPart references. XPart references contain references to a valid xPart that supplies data into the reference (and ultimately into the user view of the strongly typed document being edited). Document 500 further comprises user data, which encapsulates the xParts themselves. The xParts are typically pure data entities that have been defined by the predefined schema.

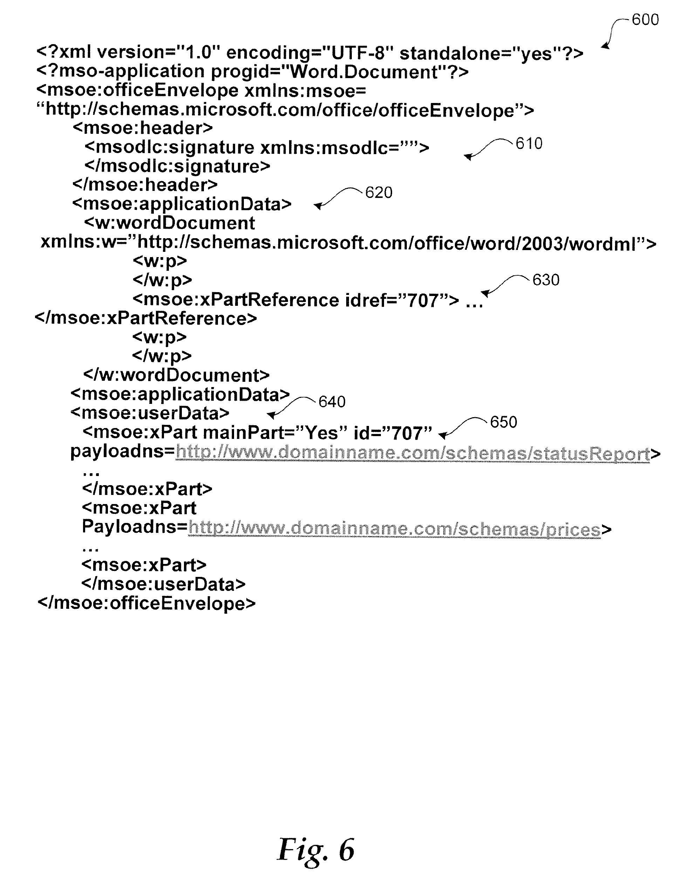

FIGURE 6 is a listing of an example document using xParts, in accordance with the present invention. Listing 600 comprises header 610 which can be used for purposes such as authentication and information security. Listing 600 further comprises application data section 620, in which is defined xPart references, such as xPart reference 630. xPart reference 630 comprises a unique identifier by which the xPart reference is referenced by an xPart.

Listing 600 further comprises user data section 640. User data section 640 comprises xParts, such as xPart 650. xPart 650 comprises a unique identifier for identifying the xPart reference to which it is associated. For example, xPart 650 comprises the unique identifier "707" for referring to the associated xPart reference within application data section 620. XPart 650 also comprises a link to information that is to be visualized and ultimately represented in the user view. (The representation can involve video and/or audio data.)

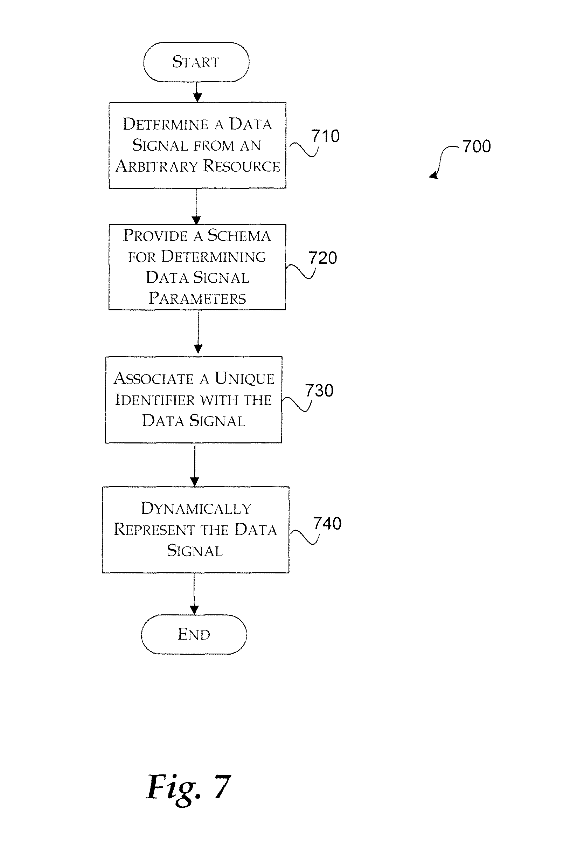

FIGURE 7 is a flow diagram for using xParts, in accordance with the present invention. In block 710 a data signal from an arbitrary resource is determined. A data signal can be any business information (such as spreadsheet information) from a selected resource. The data signal can be supplied via a data adapter. The data adapter can poll the selected resource for information (such as new information after a check-pointed time) and/ or the selected resource can "push" the information to the data adapter. Caching can be used to enhance data access time.

In block 720 a schema is provided for determining data signal parameters. The schema can be selected from a schema library (and/or a fragment library), such that the selected schema defines the data type of the data signal. The schema may also define "visualization" routines for displaying (or otherwise conveying, including in audio format) data from the data signal.

In block 730 a unique identifier is associated with the data signal. The unique identifier allows a user to provide user-supplied context information for the data signal. The user-supplied data can be entered, for example, a keyboard, mouse activities, voice-recognition, and the like.

In block 740 the data signal is dynamically represented in accordance with the defined parameters. Associated visualization routines can be used to display (or otherwise convey) the data signal in concert with the user-supplied context information.

### Strongly Typed Document Schema

The following is a listing illustrating an example of a schema for practicing the present invention.

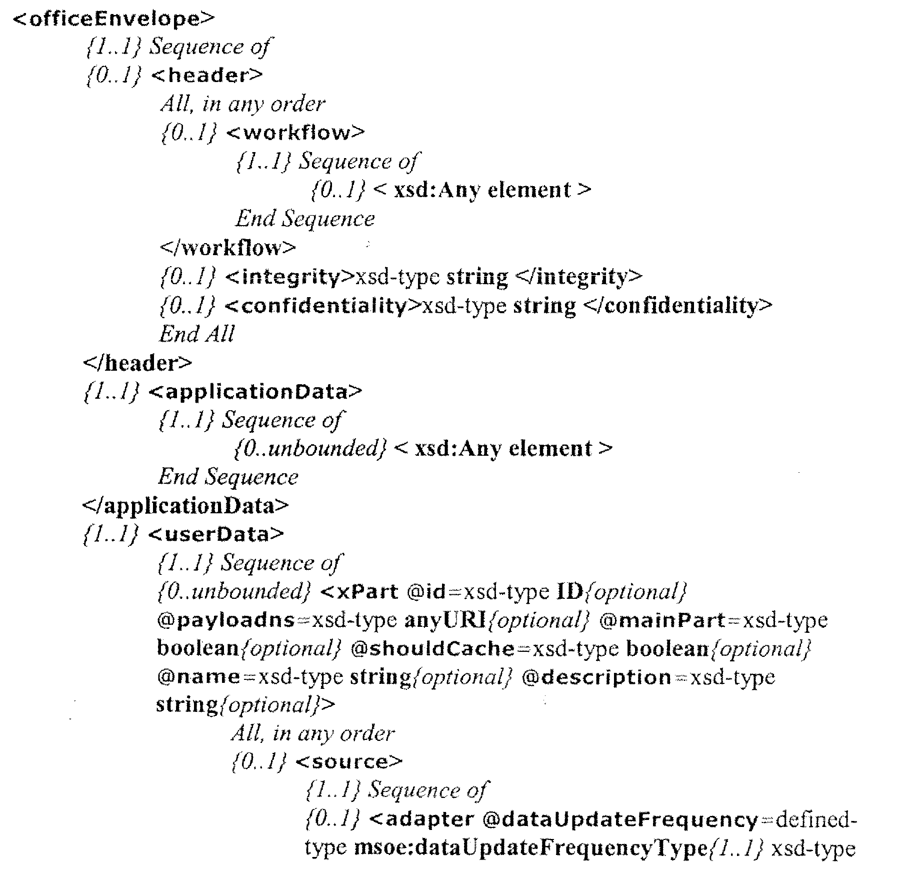

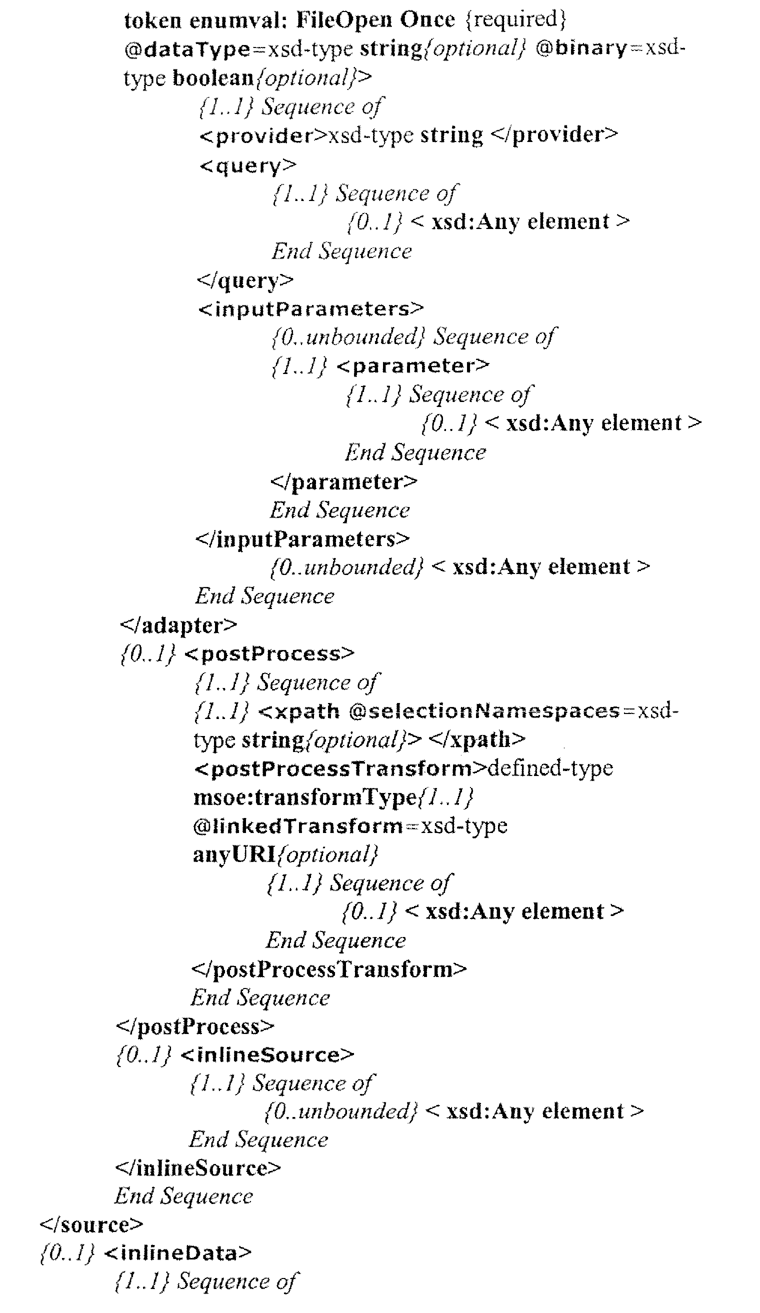

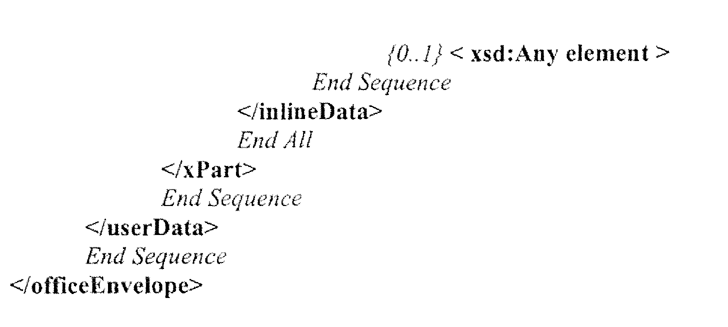

xPart references contains a reference to a valid xPart that supplies data into the reference and therefore into the application edit surface

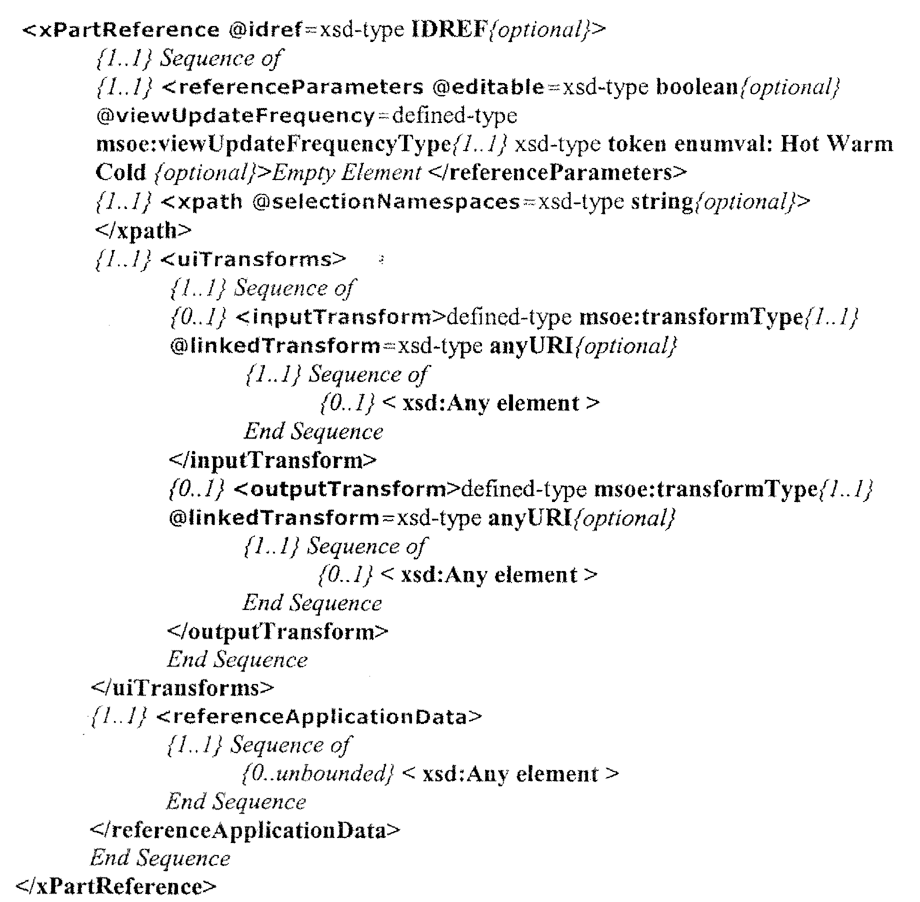

The above specification, examples and data provide a complete description of the manufacture and use of the composition of the invention. Since many embodiments of the invention can be made without departing from the spirit and scope of the invention, the invention resides in the claims hereinafter appended.

## Claims

1. A method for wrapping data, comprising:
determining a data signal from an arbitrary data source;
providing a primary schema for determining parameters that are associated with the data signal;
providing a unique identifier that is associated with the data signal from an arbitrary resource; and
dynamically representing the data signal in accordance with the determined parameters within a view that is used to convey the data signal to a user.

2. The method of Claim 1, wherein the data signal is information from a business information system.

3. The method of Claim 1, wherein the parameters that are associated with the data signal are determined by examining the contents of the data signal.

4. The method of Claim 1, wherein the data signal is dynamically represented using routines that are associated with the data signal.

5. The method of Claim 4, wherein the routines are associated with the primary schema.

6. The method of Claim 6, further comprising representing user-supplied data within the view that is used to convey the data signal to a user wherein the unique identifier is used to allow the user-supplied data to provide a context for the data signal.

7. The method of Claim 1, wherein the data signal is determined by selecting data from a library for which one of the primary schema or a secondary schema has been used to define items in the library.

8. The method of Claim 1, wherein the primary schema comprises arbitrary data content.

9. The method of Claim 1, wherein the data signal is determined by performing a live query against the arbitrary data source.

10. A computer readable medium comprising instructions for wrapping data, comprising:
determining a data signal from an arbitrary data source;
providing a primary schema for determining parameters that are associated with the data signal;
providing a unique identifier that is associated with the data signal from an arbitrary resource; and
dynamically representing the data signal in accordance with the determined parameters within a view that is used to convey the data signal to a user.

11. The medium of Claim 10, wherein the data signal is information from a business information system.

12. The medium of Claim 10, wherein the parameters that are associated with the data signal are determined by examining the contents of the data signal.

13. The medium of Claim 10, wherein the data signal is dynamically represented using routines that are associated with the data signal.

14. The medium of Claim 13, wherein the routines are associated with the primary schema.

15. The medium of Claim 10, further comprising representing user-supplied data within the view that is used to convey the data signal to a user wherein the unique identifier is used to allow the user-supplied data to provide a context for the data signal.

16. The medium of Claim 10, wherein the data signal is determined by selecting data from a library for which one of the primary schema or a secondary schema has been used to define items in the library.

17. The medium of Claim 10, wherein the primary schema comprises arbitrary data content.

18. The medium of Claim 10, wherein the data signal is determined by performing a live query against the arbitrary data source.

19. A system for wrapping data, comprising:
means for determining a data signal from an arbitrary data source;
means for providing a primary schema for determining parameters that are associated with the data signal;
means for providing a unique identifier that is associated with the data signal from an arbitrary resource; and
means for dynamically representing the data signal in accordance with the determined parameters within a view that is used to convey the data signal to a user.

20. The system of Claim 19, wherein the data signal is information from a business information system.

21. The system of Claim 19, wherein the parameters that are associated with the data signal are determined by examining the contents of the data signal.

22. The system of Claim 19, wherein the data signal is dynamically represented using routines that are associated with the data signal.

23. The system of Claim 22, wherein the routines are associated with the primary schema.

24. The system of Claim 19, further comprising representing user-supplied data within the view that is used to convey the data signal to a user wherein the unique identifier is used to allow the user-supplied data to provide a context for the data signal.

25. The system of Claim 19, wherein the data signal is determined by selecting data from a library for which one of the primary schema or a secondary schema has been used to define items in the library.

26. The system of Claim 19, wherein the primary schema comprises arbitrary data content.

27. The system of Claim 19, wherein the data signal is determined by performing a live query against the arbitrary data source.

28. A data structure, comprising;
an xPart that is associated with a schema and that is configured to determine a data source for supplying data into an application edit surface; and
an xPart reference element that is configured to identify entry points into the data structure for representing views on data from the data source that is determined by the xPart.

29. The data structure of claim 28, wherein the xPart comprises a unique identifier by which the xPart reference element refers to the xPart.

30. The data structure of claim 28, further comprising user-supplied data from a source that is different from the determined data source.

31. The data structure of claim 28, further comprising visualization routines that are configured to represent data from the determined data source.

32. The data structure of claim 31, wherein the visualization routines are used to represent audio to the user.
